# EUROPÄISCHE PATENTSCHRIFT

(11) **EP 2 286 083 B1**
(45) Veröffentlichungstag und Bekanntmachung des Hinweises auf die Patenterteilung: **31.08.2016**
(21) Anmeldenummer: 09737745.1
(22) Anmeldetag: 28.04.2009
(51) Int. Cl.: F03B 17/06, F03B 7/00

(54) **WASSERRAD MIT INTEGRIERTEM GENERATOR**
WATER WHEEL COMPRISING A BUILT-IN GENERATOR
ROUE HYDRAULIQUE A GENERATEUR INTEGRE

(30) Priorität: 02.05.2008 DE 102008022012; 26.03.2009 DE 102009015044
(43) Veröffentlichungstag der Anmeldung: 23.02.2011
(73) Patentinhaber: Drews, Hartmuth, 25421 Pinneberg (DE)
(72) Erfinder: Drews, Hartmuth, 25421 Pinneberg (DE)
(74) Vertreter: Marschall, Stefan
(86) Internationale Anmeldenummer: PCT/DE2009/000608
(87) Internationale Veröffentlichungsnummer: WO 2009/132637

(56) Entgegenhaltungen:
- EP-A1- 1 876 350
- DE-A1- 10 218 443
- DE-U1-202006 001 171
- GB-A- 2 435 494
- US-A- 4 720 640
- US-A- 4 737 070
- US-A1- 2003 137 149

## Beschreibung

Die Erfindung bezieht sich auf ein Wasserrad aus Radkranzelementen mit integriertem Generator, wobei das Wasserrad über zugeordnete Wasserschaufeln durch strömend, schießend oder freifallend abfließendes Wasser zur Stromerzeugung antreibbar ist, wobei ein Ringelement mit dem Wasserrad konzentrisch verbunden ist und mit eingesetzten Permanentmagneten zur Bildung eines Rotors des Generators besteht und als Stator elektrische Spulen in Zuordnung zu den Permanentmagneten angeordnet sind.

Funktionsbedingt haben Wasserräder eine relativ niedrige Drehzahl mit einem hohen Drehmoment. Hierdurch ist es üblich, zur Stromerzeugung ein mehrstufiges mechanisches Getriebe mit einem Wellenzapfen des Wasserrades zu verbinden und eine Ausgangswelle des Getriebes über eine Transmission mit einem Generator zu verbinden.

Bei wechselnden Wassermengen, insbesondere bei Zunahme der Wassermenge, erhöhen sich Leistung und Drehmoment, so daß die Wasserrad-Welle und das Getriebe relativ hohe Spitzen-Drehmomente aufzunehmen haben.

In der Praxis wird deshalb die Auslegung der Teile mit einem Faktor 3 gegenüber der normalen Belastung vorgenommen. Hierdurch entstehen relativ schwere und kostenaufwendige Bauteile.

Diese bekannten Anordnungen haben einen reduzierten Wirkungsgrad, insbesondere durch die mechanischen Umsetzungsverluste. Ferner unterliegen die beweglichen Teile einem Verschleiß und erfordern eine aufwendige Wartung.

Nach der DE 102 18 443 A1 ist bereits ein Wasserrad aus Radkranzelementen mit Schaufeln niedriger Drehzahl bekannt, um relativ große Wasserräder zusammenzustellen und erst vor Ort eine Endmontage vorzunehmen.

Nach der EP 1 876 350 A1 ist eine Anordnung einer Stromgeneratoranordnung bekannt geworden, die eine Turbinenanordnung beinhaltet, wobei mit der Turbine ein umlaufender Rotor mit Magneten mit einem umhüllenden Stator zur Bildung eines Generators gebildet wird. Hierbei handelt es sich gegenüber von Wasserrädern um schnelllaufende Anordnungen, die nicht auf Wasserräder übertragbar sind. Zusätzlich wird hierbei auch auf eine Schaufelradanordnung verwiesen, wobei der Stator durch auf dem Umfang umhüllte Spulen gebildet wird. Hierbei besteht der Mangel, dass die auftretenden Kräfte im Abstand zur Lagerung der Anordnung entstehen und bei der Übertragung auf Wasserräder eine verstärkte Fundamentierung erfordern.

Die Aufgabe der Erfindung ist es, eine getriebelose gattungsgemäße Anordnung zu schaffen, die durch einen einfachen Aufbau einen leichten Transport und eine modulartige Montage eines Rotors ermöglicht und eine Anpassung der Statorelemente auf die vorliegenden Verhältnisse gewährleistet.

Diese Aufgabe wird mit einer Wasserrad-Anordnung gemäß Anspruch 1 gelöst.

Die Lösung dieser Aufgabe erfolgt erfindungsgemäß dadurch, daß das Ringelement des Rotors aus modular zugeordneten Einzelelementen mit eingesetzten Permanentmagneten besteht und als Stator mindestens ein korrespondierender Teilring mit elektrischen Spulen zugeordnet ist, der auf der wasserbeaufschlagten Seite des Wasserrades im Bereich der Tragstruktur mit seinen Halteelementen angeordnet ist.

Hierdurch wird ein großer Generatordurchmesser ermöglicht und dabei ein vereinfachter Transport und eine Montage der Rotorteile gewährleistet und es kann der Stator entsprechend dem vorliegenden Potential durch einzelne Stator-Segmente zugeordnet werden.

Die bei der Energieerzeugung entstehenden Bremskräfte werden hierbei durch eine Anordnung der Statorelemente unmittelbar in das Fundament eingeleitet.

Eine vorteilhafte Ausgestaltung der Erfindung besteht darin, daß die am Ringelement angeordneten Permanentmagnete als Rotor im Bereich von Vorderseite, Rückseite, Innenmantel- bzw. Außenmantelfläche des Ringelementes mit Zuordnung des Teilringes mit seinen Spulen als Stator angeordnet sind.

Zur Erhöhung des Wirkungsgrades ist vorgesehen, daß eine Kombination der Bereiche zur Aufnahme der Permanentmagnete gebildet ist.

Eine Ausführungsform besteht darin, daß die Permanentmagnete kammartig in die Struktur des Ringelementes des Rotors eingearbeitet sind.

Ferner wird vorgeschlagen, daß das Wasserrad aus Radkranzsegmenten gebildet ist, in die die Einzelsegmente zur Bildung des Ringelementes des Rotors integriert sind.

In der Zeichnung sind Ausführungsbeispiele der Erfindung schematisch dargestellt. Es zeigen:
- Fig. 1: eine perspektivische Darstellung einer Gesamtanordnung;
- Fig. 2: eine perspektivische Teildarstellung von Rotor und Stator, wobei der Rotor als Ringelement kammartig eingesetzte Permanentmagnete aufnimmt und beiderseits Statorsegmente mit Spulen mit einem halben Spulenversatz zugeordnet sind;
- Fig. 3: eine alternative Anordnung auf einem Schwimmkörper in einem Fließgewässer und
- Fig. 4: eine weitere Anordnung mit einem Wasserrad als Staudruckmaschine

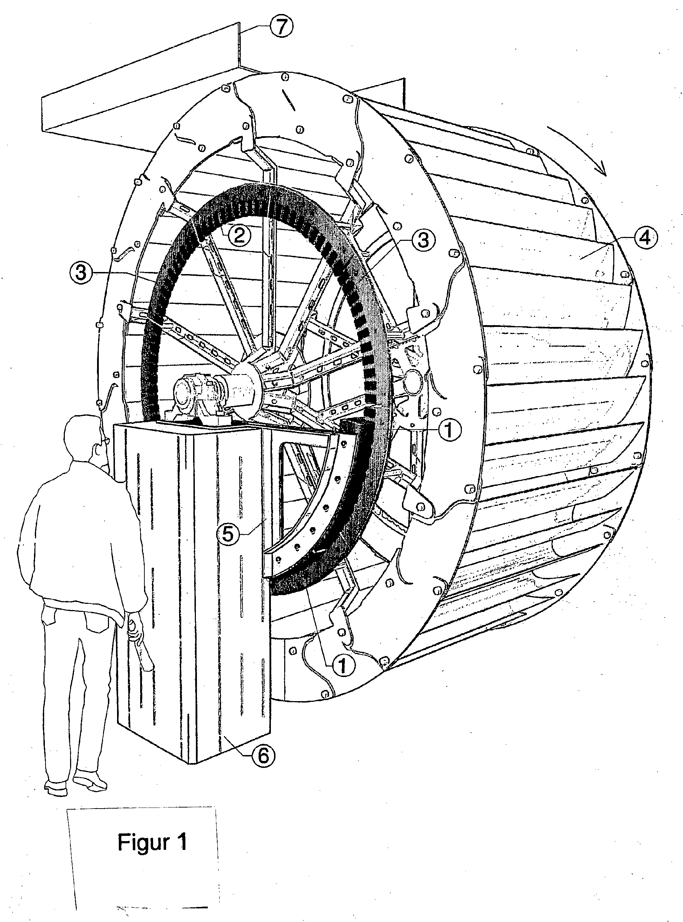

Es sind in den Ausführungsbeispielen Wasserräder 4 angeordnet, wobei gemäß Fig. 1 ein oberschlächtiges Wasserrad 4 mit einer zugeordneten Wasser-Zulaufrinne 7 ausgebildet und über ein ortsfestes Fundament 6 in bekannter Weise angeordnet ist. Das Wasserrad 4 ist dabei aus einzelnen Radkranz-Elementen aufgebaut.

Mit dem Wasserrad 4 ist ein Ringgenerator gekoppelt, der durch einen Rotor 2 als Ringelement gebildet und mit dem Wasserrad 4 fest verbunden ist. Hierbei wird eine Verbindung mit den Armen des Wasserradkörpers oder direkt auf den gebildeten Ring aufgesetzt.

Dieses Ringelement als Rotor 2 ist modular aus Einzelsegmenten 3 zusammengesetzt, die mit entsprechenden Permanentmagneten 8 bestückt sind. Hierbei werden leistungsstarke Magnete verwendet, wie sie beispielsweise unter dem Handelsnamen NEODYN-Magnete bekannt sind. Die Permanentmagnete 8 sind in den Ausführungsbeispielen im Bereich von Vorderseite, Rückseite, Innenmantel- bzw. Außenmantelfläche des Ringelementes als Rotor 2 mit Zuordnung der Teilringe 1 mit den Spulen 9 als Stator angeordnet.

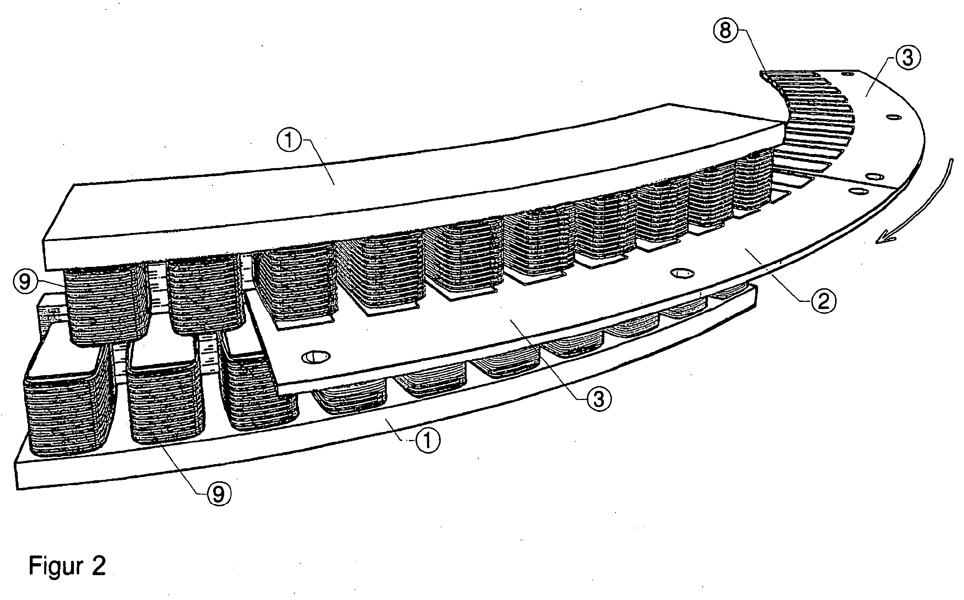

Gemäß Fig. 2 sind Permanentmagnete 8 kammartig in die Einzelsegmente 3 des Rotors 2 eingesetzt. Die Einzelsegmente 3 sind beispielsweise eisenfrei aus Kunststoff herstellbar.

Dem Rotor 2 mit seinen Einzelsegmenten 3 sind Teilringe 1 als Stator zugeordnet, die entsprechende elektrische Spulen 9 tragen und zusammen mit dem Rotor einen Generator bilden. Hierbei sind die Teilringe über eine Tragstruktur 6 mittels Halteelemente 5 angeordnet. Die Anzahl der Teilringe 1 ergibt aus dem vorliegenden hydraulisch-mechanischen Potential eines Wasserrad-Standortes.

Gemäß Fig. 2 sind Teilringe 1 des Stators beiden Seiten des Ringelementes des Rotors zugeordnet, wobei die Spulen 9 um jeweils eine halbe Breite gegeneinander versetzt angeordnet sind.

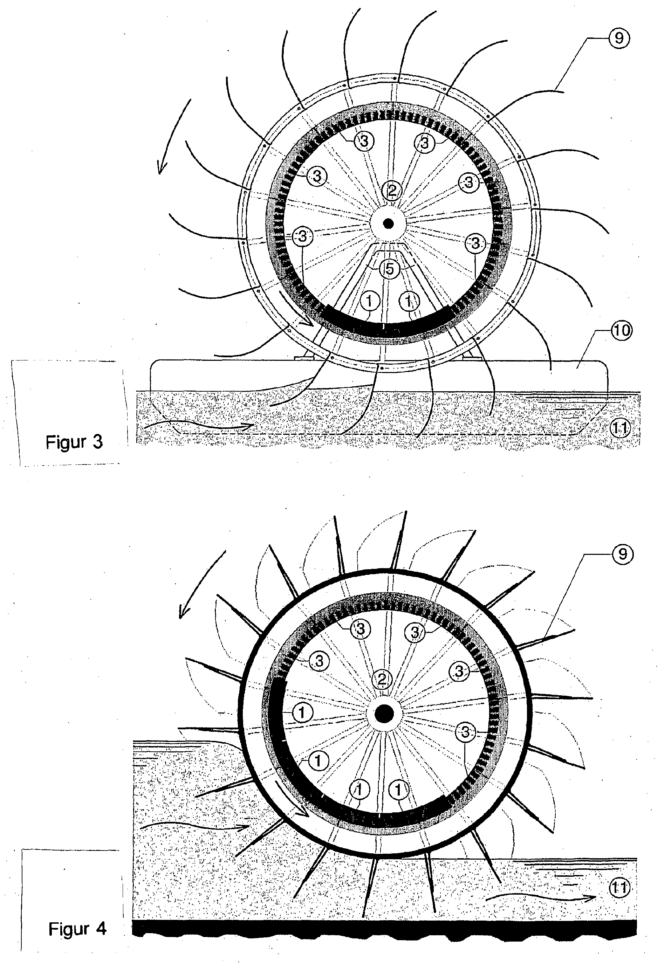

Gemäß Fig. 3 trägt ein verankerter Schwimmkörper 10 ein Wasserrad 4, wobei die zugehörigen Schaufeln 9 durch die Strömung eines Fließgewässers angetrieben werden.

Vorteilhaft wird die Anzahl der Teilringe 1 auf das hydraulisch-mechanische Potential des Wasserrad-Standortes angepaßt, wobei diese den Rotor 2 im unteren Drittel überdecken und sich günstig auf die Schwimmeigenschaften sowie deren Schwerpunkt und die Sicherheit gegen Kentern auswirkt.

Bei einer Ausbildung einer Staudruckmaschine nach Fig. 4 mit einem Wasserrad 4, dessen Schaufeln 9 auf einem zylindrischen Hohlkörper angeordnet sind, werden die Schaufeln 9 sowohl durch die Schwerkraft als auch durch die Strömung des Wassers angetrieben.

Vorteilhaft wird der Rotor 2 des Generators integrativ in die Tragstruktur des zylindrischen Hohlkörpers eingebaut und die Anzahl der Ringelemente 1 auf das hydraulisch-mechanische Potential des Wasserrad-Standortes angepaßt.

Selbstverständlich können entsprechende Ringgeneratoren auf beiden Seiten des Wasserrades 4 angeordnet werden.

## Patentansprüche

1. Wasserrad-Anordnung umfassend:
eine Tragstruktur (6);
ein Wasserrad (4), das von der Tragstruktur (6) gestützt wird;
und ein Generator, der einen Rotor (2) und einen Stator (1) aufweist;
wobei das Wasserrad (4) aus Radkranzelementen ausgebildet und über zugeordnete Wasserschaufeln durch strömend, schießend oder freifallend abfließendes Wasser zur Stromerzeugung antreibbar ist; wobei ein Ringelement (3) mit dem Wasserrad (4) konzentrisch verbunden ist und mit eingesetzten Permanentmagneten (8) zur Bildung des Rotors (2) des Generators besteht und als der Stator elektrische Spulen (9) in Zuordnung zu den Permanentmagneten (8) angeordnet sind, und wobei das Ringelement (3) des Rotors (2) aus modular zugeordneten Einzelsegmenten mit eingesetzten Permanentmagneten besteht und als genannter Stator mindestens ein korrespondierender Teilring (1) mit elektrischen Spulen (9) zugeordnet ist, der auf der wasserbeaufschlagten Seite des Wasserrades (4) im Bereich der Tragstruktur (6) mit seinen Halteelementen (5) angeordnet ist.

2. Wasserrad nach Anspruch 1, **dadurch gekennzeichnet, daß** die am Ringelement angeordneten Permanentmagnete (8) als Rotor (2) im Bereich von Vorderseite, Rückseite, Innenmantel- bzw. Außenmantelfläche des Ringelementes mit Zuordnung des Teilringes (1) mit seinen Spulen (9) als Stator angeordnet ist.

3. Wasserrad nach Anspruch 2, **dadurch gekennzeichnet, daß** eine Kombination der Bereiche zur Aufnahme der Permanentmagnete (8) gebildet ist.

4. Wasserrad nach einem der Ansprüche 1 bis 3, **dadurch gekennzeichnet, daß** die Permanentmagnete (8) kammartig in die Struktur des Ringelementes des Rotors (2) eingearbeitet sind.

5. Wasserrad nach einem der Ansprüche 1 bis 4, **dadurch gekennzeichnet, daß** das Wasserrad (4) aus Radkranzsegmenten gebildet ist, in die die Einzelsegmente (3) zur Bildung des Ringelementes des Rotors (2) integriert sind.

## Claims

1. A waterwheel arrangement, comprising
a support structure (6);
a waterwheel (4) supported by the support structure (6); and
a generator comprising a rotor (2) and a stator (1);
wherein the waterwheel (4) is formed from wheel rim elements and can be driven by means of water which flows, shoots or flows off in a free-falling manner over associated water vanes, for the purpose of power generation; wherein a ring element (3) is concentrically connected to the waterwheel (4) and provided with set-in permanent magnets (8) for forming the rotor (2) of the generator and electric coils (9) forming the stator are arranged in association with the permanent magnets (8), and wherein the ring element (3) of the rotor (2) consists of modularly associated individual segments with set-in permanent magnets and has at least one corresponding part-ring (1) forming said stator with electric coils (9) associated with it, which is arranged on the side of the waterwheel (4), which is acted upon by water, in the area of the support structure (6) with its holding elements (5).

2. The waterwheel according to claim 1, **characterised in that** the permanent magnets (8) arranged on the ring element in the areas front side, rear side, inner and outer wall surfaces of the ring element form the rotor (2) in association with the part-ring (1) with its coils (9) arranged as the stator.

3. The waterwheel according to claim 2, **characterised in that** a combination of the areas for receiving the permanent magnets (8) is formed.

4. The waterwheel according to one of claims 1 to 3, **characterised in that** the permanent magnets (8) are worked into the structure of the ring element of the rotor (2) in the manner of a comb.

5. The waterwheel according to one of claims 1 to 4, **characterised in that** the waterwheel (4) is formed from wheel rim segments, which have the individual segments (3) for forming the ring element of the rotor (2) integrated in it.

## Revendications

1. Ensemble de roue hydraulique comprenant :
une structure de support (6) ;
une roue hydraulique (4) supportée par la structure de support (6) ; et
un générateur comportant un rotor (2) et un stator (1);
dans lequel la roue hydraulique (4) est constituée d'éléments de jante et peut être actionnée par des aubes avec de l'eau s'écoulant en flux, en jet ou librement, afin de produire de l'électricité, dans lequel un élément annulaire (3) est relié de façon concentrique à la roue hydraulique (4) et présente des aimants permanents (8) incrustés pour former le rotor (2) du générateur, des bobines électriques (9) étant disposées en association avec les aimants permanents (8) pour former le stator, et dans lequel l'élément annulaire (3) du rotor (2) est pourvu de segments individuels associés de façon modulaire, avec des aimants permanents incrustés, ledit stator comprenant au moins un anneau partiel (1) correspondant avec des bobines électriques (9), lequel est disposé avec ses éléments de maintien (5) dans la région de la structure de support (6), du côté de la roue hydraulique (4) qui est sollicité par l'eau.

2. Roue hydraulique selon la revendication 1, **caractérisée en ce que** les aimants permanents (8) disposés sur l'élément annulaire servent de rotor (2) dans la région du côté avant, du côté arrière, de la surface d'enveloppe intérieure ou extérieure de l'élément annulaire, avec association de l'anneau partiel (1) avec ses bobines (9) en tant que stator.

3. Roue hydraulique selon la revendication 2, **caractérisée en ce qu'**une combinaison des régions est formée pour la réception des aimants permanents (8).

4. Roue hydraulique selon l'une des revendications 1 à 3, **caractérisée en ce que** les aimants permanents (8) sont incorporés à la façon d'un peigne dans la structure de l'élément annulaire du rotor (2).

5. Roue hydraulique selon l'une des revendications 1 à 4, **caractérisée en ce que** la roue hydraulique (4) est formée par des segments de jante dans lesquels sont intégrés les segments individuels (3) pour former l'élément annulaire du rotor (2).
